# EUROPÄISCHE PATENTSCHRIFT

(11) **EP 2 929 823 B1**
(45) Veröffentlichungstag und Bekanntmachung des Hinweises auf die Patenterteilung: **25.10.2017**
(21) Anmeldenummer: 14180814.7
(22) Anmeldetag: 13.08.2014
(51) Int. Cl.: A47L 9/14

(54) **Staubsaugerfilterbeutel für einen Upright-Staubsauger**
Vacuum cleaner filter bag for an upright vacuum cleaner
Sac d'aspirateur pour aspirateur vertical

(30) Priorität: 08.04.2014 EP 14163816
(43) Veröffentlichungstag der Anmeldung: 14.10.2015
(73) Patentinhaber: Eurofilters N.V., 3900 Overpelt (BE)
(72) Erfinder: Schultink, Jan, 3900 Overpelt (BE); Sauer, Ralf, 3900 Overpelt (BE)
(74) Vertreter: Pfenning, Meinig & Partner mbB

(56) Entgegenhaltungen:
- WO-A1-2007/134734
- WO-A1-2012/060194
- US-A- 3 416 721
- US-A- 5 342 420

## Beschreibung

Die vorliegende Erfindung betrifft einen Staubsaugerfilterbeutel für einen Upright-Staubsauger. Der erfindungsgemäße Staubsaugerfilterbeutel weist dabei eine größere Länge als Breite auf, wobei eine Längsseite und eine Schmalseite resultiert. Er wird gebildet von zwei Beutelwänden, die umlaufend miteinander verbunden sind, sodass zwischen den beiden Beutelwänden ein Innenraum ausgebildet ist. Eine Beutelwand weist dabei eine Eintrittsöffnung auf, durch die zu reinigende Luft in den Staubsaugerfilterbeutel einströmen kann. Der erfindungsgemäße Staubsaugerfilterbeutel zeichnet sich dadurch aus, dass die Beutelwand, in der die Eintrittsöffnung eingebracht ist, einer Beutelwand, die eine sich in Längsrichtung des Staubsaugerfilterbeutels erstreckende Faltung aufweist, gegenüberliegt. Die Faltung verleiht dieser Beutelwand eine erhöhte Flexibilität, wodurch der Staubsaugerfilterbeutel beispielsweise bereits beim Einsetzen oder durch einen erstmalig durch die Einlassöffnung eintretenden Luftstrom vollständig geöffnet werden kann, da die Luft im wesentlichen ungehindert in den Filterbeutel einströmen kann.

Aus dem Stand der Technik sind verschiedene Staubsaugerfilterbeutelformen bekannt. Bei Papierfilterbeuteln sind Klotz- oder Blockbodenfilterbeutel gebräuchlich. Bei Filterbeuteln aus Vliesstoffen sind solche Formen fertigungstechnisch kaum zu realisieren. Daher werden Filterbeutel aus Vliesstoffen hauptsächlich als Flachbeutel hergestellt. Es wurden erhebliche Anstrengungen unternommen, Filterbeutel aus Vliesstoffen zu entwickeln, mit denen eine besonders gute Anpassung an einen Beutelaufnahmeraum zu gewährleisten ist. Derartige Filterbeutel aus Vliesstoffen, die dem bekannten Klotz- oder Blockbodenfilterbeuteldesign in konstruktiver Hinsicht nachempfunden sind, werden üblicherweise als 3D-Filterbeutel bezeichnet. Unter solchen 3D-Filterbeuteln werden Filterbeutel verstanden, die neben einer Oberseite und einer Unterseite noch zusätzliche Beutelseiten aufweisen. In Bodenstaubsaugern, wie sie in Europa gebräuchlich sind, werden praktisch ausschließlich Vliesstofffilterbeutel als Flachbeutel und Flachbeutel mit Seitenfalten eingesetzt. In den vereinigten Staaten und Großbritannien werden hauptsächlich Staubsaugertypen vom sogenannten Upright-Design verwendet, für die hauptsächlich Blockbodenbeutel aus Filterpapier eingesetzt werden. Upright-Staubsauger zeichnen sich dadurch aus, dass sie einen Reinigungskopf aufweisen, in den der Motor integriert ist. Auf diesem Reinigungskopf ist ein Auffanggefäß angebracht, in das der entsprechende Staubsaugerfilterbeutel für den Upright-Staubsauger eingesetzt wird. Die Staubsaugerfilterbeutel für Upright-Staubsauger zeichnen sich durch ein größeres Längen-zu-Breiten-Verhältnis, aus. Ein Upright-Staubsauger ist z.B. aus der EP 2 030 552 A2 bekannt. Hinsichtlich der räumlichen Dimensionierung und konstruktiver Details wird auch für die Zwecke der vorliegenden Erfindung insbesondere auf den Offenbarungsgehalt dieser Patentanmeldung Bezug genommen.

Insbesondere bei Flachbeuteln aus Vliesstoffen sind zur Vergrößerung der effektiven Filteroberflächen verschiedene Faltungen bekannt. Ein Staubsaugerfilterbeutel gemäß dem Oberbegriff des unabhängigen Vorrichtungsanspruchs 1 und dem Oberbegriff es unabhängigen Verfahrensanspruchs 13 ist aus der WO 2007/134734 bekannt.

Demgegenüber unterscheidet sich die Ansprüche 1 und 13 durch ihren kennzeichnenden Teil. So offenbart beispielsweise die DE 20 2005 000 918 U1 einen Staubsaugerfilterbeutel mit einer aus schweißbarem flexiblen Filtermaterial bestehenden Wandung, der an zwei gegenüberliegenden Seiten Einfaltungen aufweist, wobei im Betriebszustand des Staubsaugerfilterbeutels eine Vergrößerung des Volumens des Filterbeutels durch Ausstülpung dieser Einfaltung erzielt wird.

Ein vergleichbarer Staubsaugerfilterbeutel, bei dem diese Einfaltungen auf allen vier Seiten vorhanden sind, ist aus der DE 20 2005 000 917 U1 bekannt.

Eine Fortentwicklung dieses Konzeptes ist aus der WO 00764320 bekannt, wobei der dort dargestellter Staubsaugerfilterbeutel mehre seitliche Einfaltungen aufweist, die im Betriebszustand des Staubsaugerfilterbeutels ausgestülpt und zu einer Vergrößerung des Beutelvolumens führen.

Eine besonders effektive Vergrößerung des Staubsaugerfilterbeutelvolumens ist aus der EP 2 366 321 A1 bekannt. Der dort vorgestellte Fachbeutel weist eine Vielzahl von Faltungen der Beutelwände auf, sodass das Staubsaugerfilterbeutelvolumen und die Staubspeicherkapazität effektiv vergrößert werden.

Bei Staubsaugerfilterbeuteln aus Vliesstoffen für Upright-Staubsauger stellt sich allerdings prinzipiell eine andere Problematik.

Diese Staubsaugerfilterbeutel sind von Haus aus großvolumig gewählt, sodass es primär nicht auf die Vergrößerung des ohnehin enormen Volumens des Staubsaugerfilterbeutels ankommt. Ein für das Volumen des Upright-Staubsaugers dimensionierter Flachfilterbeutel aus Vliesstoff ist in einem Upright Staubsauger nur bedingt einsetzbar. Ein solcher Filterbeutel entfaltet sich -je nach Einbausituation im Filterbeutelaufnahmeraum eines Upright Staubsaugers nicht oder nur unvollständig. Das wesentliche Problem besteht darin, dass sich ein entsprechender Flachbeutel aus Vliesstoff sich nicht vollständig aus dem Lagerzustand entfaltet. Zusätzlich hierzu besteht die Problematik, dass es beim Einlegen eines Flachfilterbeutels in dem Upright-Staubsauger zu Abknickungen im Filterbeutel kommt, so dass die eigentliche Geometrie des Filterbeutels permanent verzerrt wird. Dies verstärkt die oben angesprochene Entfaltungsproblematik noch, ebenso wird dadurch das theoretische Füllvolumen sowie die homogene Verteilung des aufgenommenen Staubes im Filterbeutel nachhaltig beeinträchtigt. Bei längerem Betrieb kann es somit zu Verstopfungen des noch nicht vollständig entfalteten Staubsaugerfilterbeutels kommen, sodass dadurch eine merkliche Volumenreduzierung und ein Verlust an zu füllendem Volumen zu beobachten ist. Die Standzeit derartiger Upright-Filterbeutel kann sich dadurch merklich reduzieren.

Die vorliegende Erfindung stellt sich daher die Aufgabe, den speziellen Typ der Upright-Staubsaugerfilterbeutel fortzuentwickeln und insbesondere zu gewährleisten, dass vor oder bei erster Inbetriebnahme des Staubsaugerfilterbeutels eine vollständige Entfaltung ermöglicht wird.

Ebenso ist es Aufgabe der vorliegenden Erfindung Verwendungszwecke des erfindungsgemäßen Upright-Staubsaugerfilterbeutels anzugeben, sowie ein Verfahren zu dessen Herstellung zu benennen.

Diese Aufgabe wird bezüglich eines Staubsaugerfilterbeutels mit den Merkmalen des Patentanspruchs 1, hinsichtlich Verwendungszwecke des Staubsaugerfilterbeutels mit den Merkmalen des Patentanspruchs 12 sowie bezüglich eines Verfahrens zur Herstellung des Staubsaugerfilterbeutels mit den Merkmalen des Patentanspruchs 13 gelöst. Die jeweiligen abhängigen Patentansprüche stellen dabei vorteilhafte Weiterbildungen dar.

Die Erfindung betrifft somit einen Staubsaugerfilterbeutel für einen Upright-Staubsauger, der eine Länge und eine Breite in einem Verhältnis von > 1,5 aufweist, so dass der Staubsaugerfilterbeutel eine Längsseite und eine Schmalseite aufweist, mit einer ersten ein Filtermaterial umfassenden Beutelwand, einer zweiten ein Filtermaterial umfassenden Beutelwand, wobei die erste und zweite Beutelwand randseitig umlaufend verbunden sind, so dass der Staubsaugerfilterbeutel vollständig geschlossen ist und zwischen der ersten und der zweiten Beutelwand ein Innenraum ausgebildet ist, eine in die zweite Beutelwand eingebrachte Eintrittsöffnung, durch die zu reinigende Luft in den Staubsaugerfilterbeutel einströmen kann sowie eine die Eintrittsöffnung einfassende Halteplatte, wobei zumindest die erste Beutelwand eine mindestens eine erste und eine zweite Seitenfalte umfassende, sich in Längsrichtung des Staubsaugerfilterbeutels erstreckende Faltung aufweist, wobei die erste und zweite Seitenfalte parallel oder im Wesentlichen parallel zueinander verlaufen, die erste Seitenfalte zwei Schenkel aufweist, und das Längenverhältnis des Schenkels zum Schenkel von 0,1 bis 0,8 beträgt.

Durch das Längen-zu-Breiten-Verhältnis von > 1,5 weist der Staubsaugerfilterbeutel eine Längsseite und eine Schmalseite auf. Die erste Beutelwand des Staubsaugerfilterbeutels weist dabei die Faltung auf. Die zweite Beutelwand, die der ersten Beutelwand gegenüberliegt, weist die Halteplatte samt Eintrittsöffnung auf. Durch die erfindungsgemäße vorhandene Faltung auf der ersten Beutelwand weist die erste Beutelwand eine vergrößerte Oberfläche, verglichen mit der durch die Umrisse des Filterbeutels gebildete Fläche auf. Die Faltung ist dabei randseitig in der die beiden Beutelwände umlaufenden Fixierung eingebunden, d.h. die aufeinander liegenden Schenkel sind hierbei miteinander in der Fixierung verbunden. In der Beutelwand selbst ist die Faltung jedoch lose und flexibel vorhanden. Wird nunmehr ein erfindungsgemäßer Staubsaugerfilterbeutel in den hierfür vorgesehenen Filterraum des Upright-Staubsaugers eingesetzt, wird der Stutzen des Upright-Staubsaugers in die Eintrittsöffnung des Staubsaugerfilterbeutels eingeführt und die Halteplatte an einer im Upright-Staubsauger vorhandenen Arretierung fixiert. Hierbei kann die Halteplatte z.B. aus ihrer Lagerposition bewegt werden, beispielsweise um 90° gekippt werden. Wird nunmehr Luft in den Staubsaugerfilterbeutel durch die Einlassöffnung eingeblasen, trifft ein Luftstrom unmittelbar auf die durch die Faltung äußerst flexibel ausgebildete erste Beutelwandung. Aufgrund der Tatsache, dass durch die Faltung in der ersten Beutelwand mehr Filtermaterial verglichen mit der oben beschriebenen nominellen durch die Umrisse definierten Fläche zur Verfügung steht, findet bei der erstmaligen Inbetriebnahme des Staubsaugerfilterbeutels ein vollständiges Entfalten statt, da der eintretende Luftstrom direkt auf die flexibel ausgestaltete erste Beutelwandung auftritt und diese somit teilweise oder vollständig entfaltet. Somit wird die eingangs beschriebene Problematik der möglicherweise unvollständigen Entfaltung des Staubsaugerfilterbeutels effektiv unterbunden. Bereits bei erstmaliger Inbetriebnahme des Staubsaugerfilterbeutels kann somit gewährleistet werden, dass dieser vollständig entfaltet im Upright-Staubsauger vorliegt und somit ein maximales Füllvolumen zur Verfügung steht.

Jede Falte, so wie der Begriff im Zusammenhang mit der vorliegenden Erfindung verwendet wird, umfasst zwei Faltenschenkel und ein Faltenscharnier. Unter einem Faltenscharnier wird der Punkt einer Falte mit dem geringsten Krümmungsradius verstanden. Durch die gedachte Verbindung der Faltenscharniere wird eine sogenannte Faltenachse erhalten. Die Faltenachse wird auch als Faltenrücken bezeichnet. Die Faltenachse kann der Längsachse einer Falte entsprechen. Der Bereich einer Falte mit einem Krümmungsradius, der größer ist als der minimale Krümmungsradius der Falte, werden als Faltenschenkel bezeichnet. Der zwischen den Faltenschenkeln einer Falte liegende Bereich wird als Faltenkern bezeichnet. Die Faltenschenkel einer Falte können also insbesondere auch eine Krümmung aufweisen. Falten können auch Wendepunkte aufweisen. Wendepunkte sind jene Stellen einer Falte, insbesondere der Faltenschenkl, an welchen sich die Krümmung der Falte von konkav zu konvex ändert. Eine Verbindungslinie, die mehrere Wendpunkte einer Falte verbindet, wird als Inflexionslinie (Wendelinie) bezeichnet. Zwei benachbarte Falten können sich auch einen Faltenschenkel teilen. Die Abfolge mehrerer Falten wird im Zusammenhang mit der vorliegenden Erfindung als Faltung bezeichnet. Faltungen können insbesondere Schenkel haben, die parallel zur Beutelwand verlaufen. Die Faltenschenkel der Falten können insbesondere glatt sein. Unter "glatt" wird hierbei verstanden, dass die Faltenschenkel keine Verdichtungen und/oder Strukturierungen aufweisen, insbesondere die die Form der Falten stabilisieren sollen. Ein oder mehrere Faltenschenkel einer oder mehrerer Falten können eine oder mehrere Prägestrukturen umfassen, insbesondere wobei die Prägestrukturen nicht zum Stabilisieren der Form der Falten dienen. Dadurch kann gegebenenfalls eine weitere Vergrößerung der zur Filtration zur Verfügung stehenden Fläche erreicht werden.

Bei der Erfindung ist es nunmehr wesentlich, dass der Schenkel der ersten Falte, der durch den Abschnitt der Wandung gebildet wird, die von der seitlichen Verbindungskante des Staubsaugerfilterbeutels bis zur ersten Falte verläuft, länger ist als der zweite Schenkel der ersten Falte, d.h. der Schenkel, der durch die Verbindung der ersten und zweiten Falte gebildet wird und somit erster und zweiter Falte gemein ist. Somit ist gewährleistet, dass die erste Falte, aber auch die zweite Falte im Bereich zwischen den beiden seitlichen Verbindungslinien der ersten und zweiten Wandung des Staubsaugerfilterbeutels in Längsrichtung angeordnet sind. Hierdurch wird eine optimale Entfaltung beim Einsetzen des Staubsaugerfilterbeutels in den Upright-Staubsauger gewährleistet.

Durch die erfindungsgemäße Anordnung bzw. Bemessung der jeweiligen Schenkel der ersten Falte ist die Faltung im erfindungsgemäßen Staubsaugerfilterbeutel liegend ausgebildet. Hierunter wird verstanden, dass die Faltenschenkel der Faltung im wesentlichen parallel zur Beutelwand angeordnet sind und übereinander zum Liegen kommen.

Die Halteplatte wird hier allgemein als ein Element des Staubsaugerfilterbeutels angesehen, das der Halterung des Staubsaugerfilterbeutels im Inneren eines Staubsaugergehäuses dient. Die Halteplatte kann insbesondere mit der Beutelwand des Staubsaugerfilterbeutels verbunden sein und im Bereich einer Einströmöffnung angeordnet sein. Es kann vorteilhaft sein die Faltungen aufweisende Beutelwand in einem ersten Schritt zu verdichten, beispielsweise durch Ultraschallschweißung, und in einem zweiten Schritt die Halteplatte aufzuschweißen. Zur Halterung des Staubsaugerfilterbeutels in einem Staubsauger wird die Halteplatte mit einem entsprechenden Halterungselement des Staubsaugers verbunden, insbesondere in Eingriff gebracht. Die Halteplatte kann grundsätzlich eine beliebige Form aufweisen. Beispielsweise kann die Halteplatte als ebenes, flächiges Bauteil wie in der EP 1 849 392 gezeigt, ausgebildet sein. Die Halteplatte kann auch eine komplexere Struktur, wie etwa in der DE 20 2008 006 604 gezeigt, aufweisen.

Gemäß einer bevorzugten Ausführungsform ist die Halteplatte mit der Eintrittsöffnung nahe eines schmalseitigen Randes (d.h. einer Schmalseite) des Staubsaugerfilterbeutels angeordnet. Die Halteplatte ist dabei vollflächig in der zweiten Beutelwand untergebracht, d.h. die Halteplatte überragt an keiner Stelle die den Filterbeutel abschließende, durch die umlaufende Verbindung erzeugte Dimensionierung des Staubsaugerbeutels. Hierbei beträgt bevorzugt das Verhältnis des minimalen Abstands der Halteplatte zu einer schmalseitigen Verbindung des Staubsaugerfilterbeutels bezogen auf eine Dimensionierung der Halteplatte in Längsrichtung des Staubsaugerfilterbeutels < 0,5, bevorzugt < 0,2, besonders bevorzugt von 0,1 bis 0.

Alternativ und ebenso bevorzugt ist es, dass die Halteplatte mit Eintrittsöffnung derart in der zweiten Wandung des Staubsaugerfilterbeutels angeordnet ist, dass die Halteplatte die Schmalseite des Staubsaugerfilterbeutels überragt bzw. an dieser Schmalseite übersteht. Hierbei ist jedoch zu beachten, dass der Überstand so zu bemessen ist, dass die Eintrittsöffnung nach wie vor vollflächig in der Wandung ausgebildet ist. Bevorzugt beträgt das Verhältnis des Überstandes der Halteplatte zu einer schmalseitigen Verbindung des Staubsaugerfilterbeutels bezogen auf eine Dimensionierung der Halteplatte in Längsrichtung des Staubsaugerfilterbeutels < 0,5, bevorzugt < 0,2, besonders bevorzugt von 0,1 bis 0,01.

Beide zuvor beschriebenen bevorzugten Ausführungsformen ermöglichen eine exzellente Art der Entfaltung des erfindungsgemäßen Staubsaugerfilterbeutels beim Einsetzen und/oder der erstmaligen Inbetriebnahme in einen hierfür vorgesehen Upright-Staubsauger. Durch die möglichst randnahe Anbringung der Halteplatte muss an diesem Ende der Staubsaugerfilterbeutel nur unwesentlich verkrümmt bzw. durch das Umlegen der Halteplatte verzerrt werden.

Bevorzugt ist ferner, dass die Faltung der ersten Beutelwand des Filtermaterials maximal acht, bevorzugt maximal vier Seitenfalten aufweist.

Insbesondere und erfindungsgemäß besonders bevorzugt weist zumindest die Faltung der ersten Beutelwand vier Seitenfalten aufweist, wobei die Faltung bezüglich der ersten Beutelwand bevorzugt symmetrisch ausgebildet ist.

Diese Ausführungsform kann beispielsweise vorsehen, dass die erste Beutelwand des Staubsaugerfilterbeutels lediglich vier Falten aufweist, die gemäß den zuvor beschriebenen allgemeinen Ausführungen ausgebildet ist. Die vier Seitenfalten sind dabei, zumindest in der ersten Wandung des Staubsaugerfilterbeutels angebracht. Die Symmetrie ist dabei hinsichtlich einer demnach mittig verlaufenden Längsachse des Staubsaugerfilterbeutels spiegelbildlich, sodass die erste Falte spiegelsymmetrisch zur dritten Falte und die zweite Falte spiegelsymmetrisch zur vierten Falte ausgebildet ist. Die Faltung umfasst somit einen die zweite und vierte Falte verbindenden Schenkel, der die Vorderseite der Wandung des Staubsaugerfilterbeutels bildet.

Eine bevorzugte Weiterbildung dieser Ausführungsform sieht vor dass der die erste und zweite Falte verbindende Schenkel auf der dem Innenraum abgewandten Seite des Schenkels, der die randseitige Verbindung der Längsseite und die erste Falte verbindet, angeordnet ist und in einem Lagerzustand auf diesem zum liegen kommt. Gleichzeitig weist die dritte Seitenfalte zwei Schenkel auf, wobei der erste Schenkel der dritten Seitenfalte die andere randseitige Verbindung der Längsseite und die dritte Falte verbindet und der zweite Schenkel die dritte und vierte Falte verbindet, wobei der Schenkel auf der dem Innenraum abgewandten Seite des Schenkels angeordnet ist und in einem Lagerzustand auf diesem zum Liegen kommt.

Bevorzugt ist die Halteplatte in der zweiten Beutelwandung derart angeordnet, dass sie in Projektion auf die erste Beutelwandung auf dem einen, die zweite Faltenseite und eine vierte Faltenseite verbindenden Schenkel zum Liegen kommt. Dies bedeutet mit anderen Worten, dass die Halteplatte hinsichtlich der Breitendimensionierung der zweiten Wandung des Staubsaugerfilterbeutels relativ mittig angeordnet ist.

Weiterhin kann es bei der zuvor genannten Ausführungsform vorteilhaft sein, wenn der die zweite und vierte Seitenfalte verbindende Schenkel mindestens so breit dimensioniert ist, wie die Breite der Halteplatte. Bevorzugt weist die Breite des die zweite und vierte Seitenfalte verbindenden Schenkels das 1,1 bis 5-Fache der Breite der Halteplatte auf.

Eine alternative Ausführungsform des erfindungsgemäßen Staubsaugerfilterbeutels sieht vor, dass zumindest die Faltung der ersten Beutelwand acht Seitenfalten aufweist, wobei die Faltung bezüglich der ersten Beutelwand symmetrisch ausgebildet ist.

Diese Ausführungsform ähnelt der zuvor beschriebenen bevorzugten Ausführungsform mit vier Falten, der einzige Unterschied dabei ist, dass zwei weitere Falten in der Wandung vorhanden sind. Somit kann die Flexibilität des Staubsaugerfilterbeutels weiter erhöht werden.

Bei dieser Ausführungsform ist bevorzugt, dass die Faltung derart ausgebildet ist, dass die die jeweiligen Schenkel der jeweiligen Seitenfalten im Lagerzustand aufeinander zum liegen kommen. Die Halteplatte kann dann auf der der Faltung gegenüberliegenden zweiten Beutelwandung so angeordnet sein, dass sie in Projektion einem äußersten Schenkel gegenüberliegt, wobei dieser Schenkel bevorzugt mindestens so breit dimensioniert ist, wie die Breite der Halteplatte, wobei weiter bevorzugt die Breite des Schenkels das 1,1 bis 5-Fache der Breite der Halteplatte aufweist.

Bei allen zuvor beschriebenen Ausführungen des erfindungsgemäßen Staubsaugerfilterbeutels ist es vorteilhaft, wenn das Verhältnis von Länge zu Breite größer als 2, bevorzugt größer als 3 ist.

Prinzipiell kann auch die zweite Beutelwand, d.h. die Beutelwand, die die Halteplatte umfasst und die der ersten Beutelwand mit Faltung gegenüber liegt, ebenso eine Faltung aufweisen. In diesem Falle, kann die Faltung in der zweiten Wandung identisch ausgebildet sein wie in der ersten Wandung. Bevorzugt hierbei ist allerdings, dass die zweite Beutelwand keine Faltung aufweist.

Insbesondere ist, das Filtermaterial der ersten und zweiten Beutelwand ein Vliesmaterial.

Das Vliesstoffmaterial kann eine oder mehrere Schichten aus Vliesstoffmaterial umfassen. Mehrere Schichten aus Vliesstoffmaterial können insbesondere gemeinsam gefaltet sein. Die Beutelwand kann insbesondere auch ein Laminat aus mehreren Schichten, insbesondere zwei oder mehr Schichten, umfassen oder aus einem solchen bestehen. Beispielsweise kann das Laminat ein Filamentspinnvliesstoff (Spunbond) - schmelzgesponnener Mikrofaserspinnvliesstoff (Meltblownvliesstoff) - Filamentspinnvliesstoff (Spunbond) Laminat (SMS-Laminat) sein. Auch können zwei oder mehr Meltblownvlieslagen verwendet werden (SMMS-Laminat, SnxMS-Laminat).

Als Materialien für die Beutelwand, insbesondere für das gefaltete Vliesstoffmaterial, kommen prinzipiell alle für die Herstellung von Staubsauger-filterbeuteln bekannten Materialen in Betracht. Als Vliesstoffmaterial kann ein trocken- oder nassgelegter Vliesstoff oder ein Extrusionsvliesstoff, insbesondere ein schmelzgesponnener Mikrofaserspinnvliesstoff (Meltblownvliesstoff) oder Filamentspinnvliesstoff (Spunbond) verwendet werden. Es können auch zusätzlich Nanofaserlagen vorhanden sein. Die Abgrenzung zwischen nassgelegtem Vliesstoffen beziehungsweise Nonwovens und herkömmlichen nassgelegtem Papier erfolgt gemäß der unten genannten Definition, wie sie auch von der International Association Serving the Nonwovens and related Industries (EDANA) verwendet wird. Ein herkömmlich bekanntes (Filter-) Papier ist also kein Vliesstoff. Der Vliesstoff kann Stapelfasern oder Endlosfasern umfassen. Fertigungstechnisch können auch mehrere Schichten an Stapelfasern oder Endlosfasern vorgesehen werden, die zu genau einer Schicht Vliesstoff verfestigt werden. Beispielsweise kann die Beutelwand, insbesondere das gefaltete Vliesstoffmaterial, ein Laminat aus Filamentspinnvliesstoff und Meltblownvliesstoff (SMS, SMMS oder SnxMS) umfassen. Dieses Laminat kann mittels eines Heißklebers laminiert oder kalandriert sein. Die Schicht aus Meltblownvliesstoff kann gekreppt sein. Der Begriff Vliesstoff ("Nonwoven") wird gemäß der Definition nach ISO-Standard ISO 9092: 1988 beziehungsweise CEN-Standard EN29092 verwendet. Insbesondere sind die Begriffe Faservlies oder Vlies und Vliesstoff auf dem Gebiet der Herstellung von Vliesstoffen wie folgt gegeneinander abgegrenzt und auch im Sinne der vorliegenden Erfindung so zu verstehen. Zur Herstellung eines Vliesstoffes werden Fasern und/oder Filamente verwendet. Die lockeren oder losen und noch unverbundenen Fasern und/oder Filamente werden als Vlies oder Faservlies (Web) bezeichnet. Durch einen sogenannten Vliesbindeschritt entsteht aus einem derartigen Faservlies schließlich ein Vliesstoff, der eine ausreichende Festigkeit aufweist, um zum Beispiel zu Rollen aufgewickelt zu werden. Mit anderen Worten wird ein Vliesstoff durch die Verfestigung selbstragend ausgebildet. (Details zur Verwendung der hierin beschriebenen Definitionen und/oder Verfahren lassen sich auch im Standardwerk "Vliesstoffe", W. Albrecht, H. Fuchs, W. Kittelmann, Wiley-VCH, 2000 entnehmen.) Das Vliesstoffmaterial kann (bevor die Falten eingebracht werden) für Staubsaugerfilterbeutel für den Haushaltsgebrauch ein Flächengewicht von unter 350 g/m², bevorzugt unter 250 g/m², weiter bevorzugt unter 200 g/m², insbesondere zwischen 25 g/m² und 150 g/m², aufweisen. Das Vliesstoffmaterial kann (bevor die Falten eingebracht werden) auch ein Flächengewicht von über 250 g/m² aufweisen. Insbesondere für gewerbliche Staubsaugerfilterbeutel kann dies, je nach mechanischer Anforderung, vorteilhaft sein.

Zusätzlich oder alternativ zu den beschriebenen Weiterbildungen kann der Staubsaugerfilterbeutel wenigstens ein Element zur Strömungsumlenkung oder Strömungsverteilung im Staubsaugerfilterbeutel umfassen, insbesondere wobei sich das Element im Luftstrom der in den Staubsaugerfilterbeutel strömenden Luft bewegen kann. Ein derartiges Element ist beispielsweise aus der EP 1 787 560 oder der EP 1 804 635 bekannt. Beispielsweise kann ein solches Element in Form von wenigstens einem, im Inneren des Staubsaugerfilterbeutels, an der Beutelwand angebrachten Materialstreifen ausgebildet sein oder einen solchen Materialstreifen umfassen. Beispielsweise kann ein solches Element wenigstens einem Materialstreifen aus Vliesstoff oder Filterpapier entsprechen oder wenigstens einen Materialstreifen aus Vliesstoff oder Filterpapier umfassen. Der wenigstens eine Materialstreifen kann wenigstens teilweise geschlitzt sein.

Zudem betrifft die vorliegende Erfindung die Verwendung eines zuvor beschriebenen erfindungsgemäßen Staubsaugerfilterbeutels als Staubsaugerfilterbeutel für einen Upright-Staubsauger.

Weiterhin betrifft die vorliegende Erfindung ein Verfahren zur Herstellung eines zuvor beschriebenen erfindungsgemäßen Staubsaugerfilterbeutels für Upright-Staubsauger, bei dem
a) eine Bahn eines Filtermaterials für eine erste Beutelwand sowie eine Bahn eines Filtermaterials für eine zweite Beutelwand bereitgestellt wird, wobei die Bahn des Filtermaterials für die erste Beutelwand breiter dimensioniert ist wie die Bahn des Filtermaterials für die zweite Beutelwand,
b) in zumindest die Bahn des Filtermaterials für die erste Beutelwand eine mindestens eine erste und eine zweite Seitenfalte umfassende Faltung eingebracht wird, so dass die Seitenfalten parallel oder im Wesentlichen parallel zueinander verlaufen, wobei zwei Schenkel entstehen
c) die Bahn des Filtermaterials für die erste Beutelwand sowie die Bahn des Filtermaterials für eine zweite Beutelwand übereinander gebracht und randseitig umlaufend verbunden werden, so dass ein vollständig geschlossener Staubsaugerfilterbeutel entsteht, der einen zwischen der ersten und der zweiten Beutelwand ausgebildeten Innenraum aufweist, so dass das Längenverhältnis des die erste und zweite Seitenfalte verbindenden Schenkels zum Schenkel der die randseitige Verbindung mit der ersten Seitenfalte verbindet von 0,1 bis 0,8 beträgt,
d) eine Eintrittsöffnung sowie eine Halteplatte in die Bahn des Filtermaterials für die zweite Beutelwand eingebracht wird,
wobei die Bahn des Filtermaterials für die zweite Beutelwand eine Breite B aufweist und die Bahn des Filtermaterials für die erste Beutelwand und die Bahn des Filtermaterials für die zweite Beutelwand eine Länge in einem Verhältnis von > 1,5 aufweisen oder ein entsprechendes Verhältnis durch den Verbindungsschritt c) eingestellt wird, wobei Schritt d) auch vor Schritt a), Schritt b) oder Schritt c) ausgeführt werden kann.

Beim erfindungsgemäßen Verfahren werden somit prinzipiell zwei Bahnen aus einem Filtermaterial umlaufend miteinander verschweißt. Bevorzugt wird gleichzeitig bei dem Übereinanderbringen der Bahn für die erste Wandung und die zweite Wandung des Staubsaugerfilterbeutels eine Faltung in zumindest die erste Wandung, bevorzugt lediglich in die erste Wandung eingebracht und anschließend die Bahnen miteinander zum fertigen Staubsaugerfilterbeutel verbunden, z.B. verschweißt.

Vorteilhaft ist hierbei, wenn die Bahn des Filtermaterials für die erste Beutelwand mindestens 20 %, bevorzugt mindestens 30 %, besonders bevorzugt mindestens 40 % breiter dimensioniert ist wie die Bahn des Filtermaterials für die zweite Beutelwand.

Das Verfahren kann insbesondere kontinuierlich ausgeführt werden, hierbei sind die Bahn des Filtermaterials für die erste Beutelwand und die Bahn des Filtermaterials für die zweite Beutelwand in Längsrichtung endlos dimensioniert und das Verhältnis von Länge L zu Breite B wird durch Einbringen der randseitigen Verbindung in Längsrichtung erzeugt, wonach ein einzelner Staubsaugerfilterbeutel abgelängt wird.

Zudem ist es vorteilhaft, wenn das Filtermaterial für die erste und zweite Beutelwand ein Vliesmaterial ist und die randseitige Verbindung durch Schweißen, insbesondere durch Ultraschallverschweißen erzeugt wird.

Die vorliegende Erfindung wird anhand der nachfolgenden Ausführungen näher beschrieben, ohne die Erfindung auf die dargestellten speziellen Details zu beschränken.
- Figur 1: zeigt hierbei eine erste, prinzipielle Ausführungsform der vorliegenden Erfindung.
- Figur 2a und 2b: zeigen mögliche Positionen der Halteplatte am Staubsaugerfilterbeutel.
- Figur 3: zeigt eine bevorzugte Ausführungsform der vorliegenden Erfindung.
- Figur 4: zeigt eine weitere Ausführungsform der vorliegenden Erfindung.
- Figur 5: verdeutlich das Prinzip der mechanischen Entfaltung des Staubsaugerfilterbeutel aus einem Lager in einem Betriebszustand.

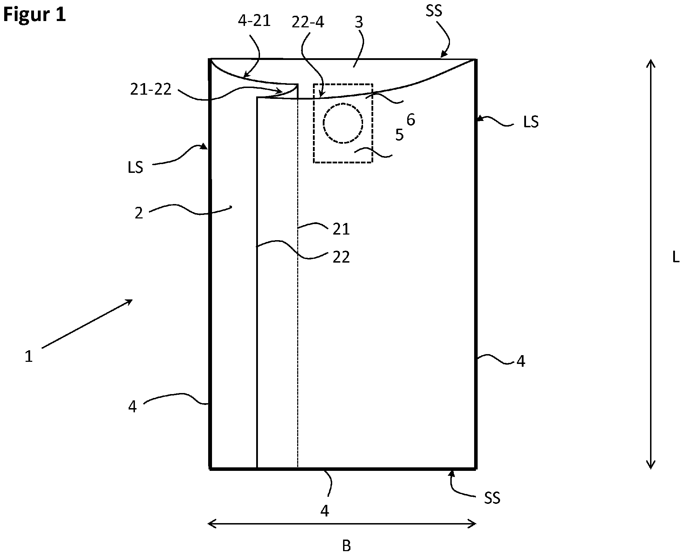

Figur 1 zeigt eine erste Ausführungsform eines erfindungsgemäßen Staubsaugerfilterbeutels 1. Dieser weist zwei Längsseiten LS und zwei Schmalseiten SS auf, wobei die in Figur 1 dargestellte untere Schmalseite SS verschlossen dargestellt ist und zur Verdeutlichung der Faltung im Staubsaugerfilterbeutel die obere Schmalseite SS geöffnet dargestellt ist. Im fertig konfektionierten Zustand ist die oben liegende Schmalseite SS jedoch selbstverständlich genau wie untenliegende Schmalseite SS verschlossen. Der Staubsaugerfilterbeutel 1 gemäß der vorliegenden Erfindung umfasst eine erste Beutelwand 2 sowie eine zweite Beutelwand 3, wobei im vorliegenden Fall die erste Beutelwand 2 in der Figur 1 vorneliegend dargestellt ist. Die Länge des Staubsaugerfilterbeutels ist mit L angegeben, die Breite mit B. Die beiden Beutelwandungen 2 und 3 sind umlaufend verbunden, was in Figur 1 mit dem Bezugszeichen 4 dargestellt ist. Die Verbindung 4 kann beispielsweise im Falle von Vliesmaterialien, die als Beutelwand 2 bzw. 3 eingesetzt werden können, eine Schweißnaht sein. Die in Figur 1 hinten liegend dargestellte zweite Beutelwand 3 umfasst zudem eine Eintrittsöffnung 5, sowie eine Halteplatte 6, mit der Halteplatte 6 kann der Staubsaugerfilterbeutel 1 in einem Upright-Staubsauger fixiert werden. Die erste Beutelwand 2 weist eine Faltung auf, die eine erste Seitenfalte 21 sowie eine zweite Seitenfalte 22 umfasst. Die Faltung der Wandung erstreckt sich somit in Längsrichtung L des Staubsaugerfilterbeutels 1 und ist über die komplette Länge der Wandung 2 ausgebildet. Die erste Falte umfasst dabei zwei Schenkel, nämlich einen ersten Schenkel 4-21, der von der linken Verbindung 4 des Staubsaugerfilterbeutels bis zur ersten Falte 21 geführt ist, sowie einen zweiten Schenkel 21-22, der die erste Falte 21 mit der zweiten Falte 22 verbindet. Der zweite Schenkel 21-22 der ersten Falte 21 stellt gleichzeitig den ersten Schenkel der zweiten Falte 22 dar, insofern ist der Schenkel 21-22 beiden Falten 21 und 22 gemein. Der zweite Schenkel 22-4 der zweiten Falte 22 führt von der zweiten Falte 22 hin zur rechten Verbindung 4 des Staubsaugerfilterbeutels.

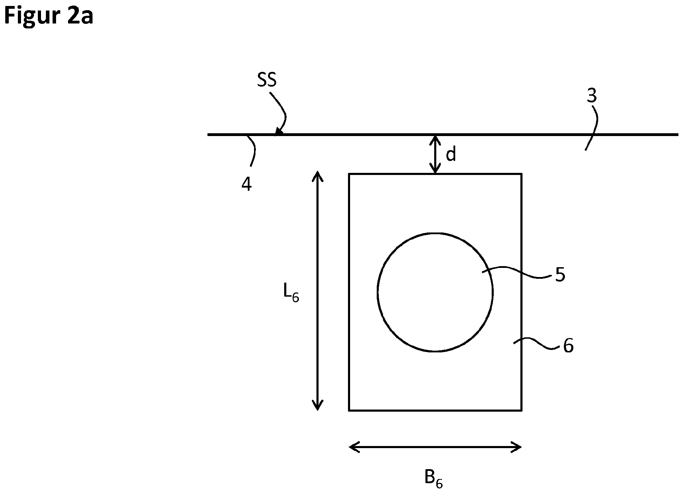

Figur 2a zeigt eine erste Möglichkeit des Anbringens einer Halteplatte 6 mit Eintrittsöffnung 5 in der zweiten Wandung 3 des Staubsaugerfilterbeutels. Figur 2a stellt insofern einen vergrößerten Ausschnitt des Anbringungsbereich der Halteplatte 6 an der hinteren Wandung 3 des Staubsaugerfilterbeutels wie in Figur 1 dargestellt dar. Die Halteplatte weist dabei eine Länge L₆ sowie eine Breite B₆ auf. Der geringste Abstand der Halteplatte 6 zur randseitigen Verbindung 4 der Schmalseite SS ist dabei mit d bezeichnet. Gemäß dieser Ausführungsform ist vorgesehen, dass ein gewisser Abstand der Halteplatte zur randseitigen Verbindung nicht überschritten wird, sodass die Halteplatte dabei möglichst randseitig am Staubsaugerfilterbeutel angeordnet ist, um ein unkompliziertes mechanisches Entfalten beim Einsetzen bzw. bei der Inbetriebnahme des Staubsaugerfilterbeutels in einen Upright-Staubsauger zu ermöglichen. Die Details der mechanischen Entfaltung bei Einsetzen des Staubsaugerfilterbeutels 1 in des Upright-Staubsauger werden nachfolgend noch eingehender erläutert.

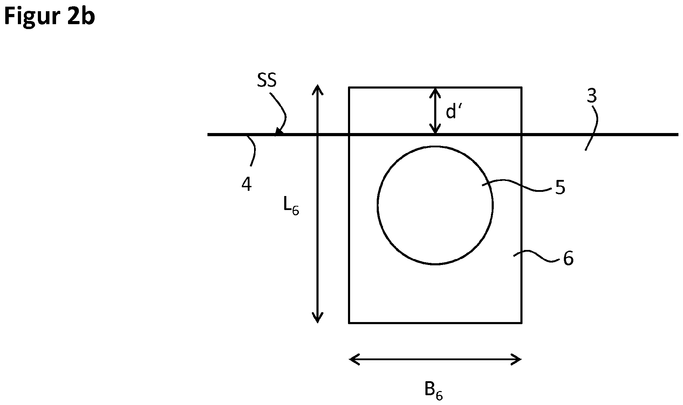

Figur 2b zeigte eine weitere Möglichkeit des Anbringens der Halteplatte am Staubsaugerfilterbeutel. Hierbei überragt die Halteplatte 6 den Staubsaugerfilterbeutel, d.h. ist über die Verbindung 4 der oben liegenden Schmalseite SS des Staubsaugerfilterbeutels hinausgeführt. Zu beachten ist dabei, dass die Eintrittsöffnung 5 noch vollständig in der zweiten Wandung 3 des Staubsaugerfilterbeutels eingebracht ist. Sämtliche Bezugszeichen, die auch für Figur 2a verwendet wurden, gelten uneingeschränkt für die Figur 2b. Der Überstand der Halteplatte 6 ist hierbei der Länge der größten überstehenden Wegstrecke, gemessen von dem Punkt der Halteplatte 6, der am weitesten von der Verbindung zu der Schmalseite SS entfernt ist. In Figur 2b ist diese Strecke mit d' gekennzeichnet.

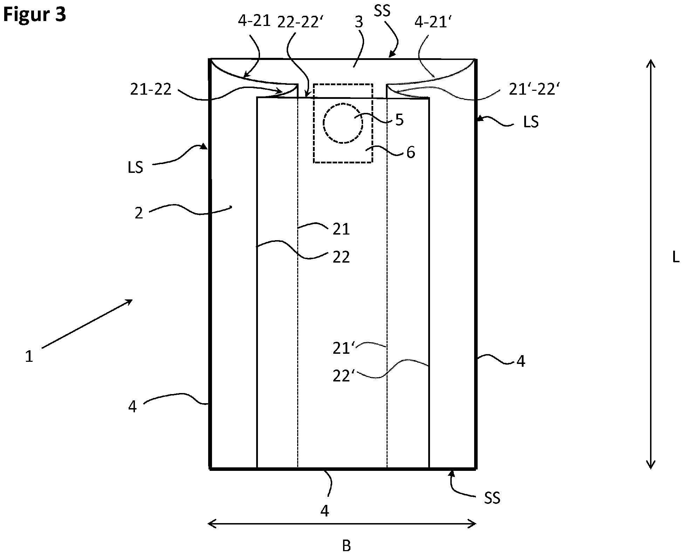

Figur 3 zeigt eine besonders bevorzugte Ausführungsform des erfindungsgemäßen Staubsaugerfilterbeutels 1. Dieser ist prinzipiell ähnlich ausgestaltet wie der Staubsaugerfilterbeutel 1 gemäß Fig. 1. Allerdings weist der Staubsaugerfilterbeutel 1 eine dritte Falte 21' sowie eine vierte Falte 22' auf und ist bezüglich der Faltung spiegelsymmetrisch zu einer gedachten, mittig verlaufenden Längsachse in Längsrichtung L des Staubsaugerfilterbeutels ausgebildet. Die zweite und vierte Falte verbindet dabei ein gemeinsamer Schenkel 22-22', die vierte Falte und die dritte Falte verfügen über einen gemeinsamen Schenkel 21'-22', während die dritte Falte über einen weiteren Schenkel 4-21' mit der in Figur 3 dargestellten rechten randseitigen Verbindung verbunden ist. Die Halteplatte 6 ist dabei in der in Figur 3 hinten liegend dargestellten Beutelwandung 3 und dem Schenkel 22-22', der die zweite Falte 22 mit der vierten Falte 22' verbindet, gegenüberliegend untergebracht.

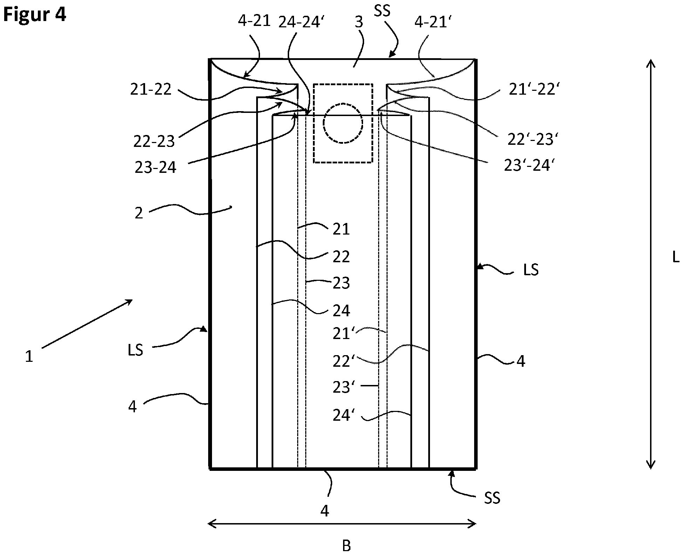

Eine weitere Möglichkeit der Ausbildung einer Faltung im Staubsaugerfilterbeutel ist in Figur 4 dargestellt. Anstelle der vier explizit vorhanden Falten des Staubsaugerfilterbeutels wie in Figur 3 dargestellt, verfügt der in Figur 4 dargestellte Staubsaugerfilterbeutel insgesamt über 8 Falten, die mit 21, 22, 23, 24, 21', 22', 23', 24'gekennzeichnet sind. Der Staubsaugerfilterbeutel gemäß Fig. 4 ist ebenso spiegelsymmetrisch bezüglich einer mittig verlaufenden Längsachse in Längsrichtung L des Staubsaugerfilterbeutels 1 ausgebildet. Die Falten untereinander verfügen dabei über gemeinsame Schenkel. Die Halteplatte ist beispielsweise in der Figur 4 hinten liegend dargestellten Beutelwandung und dem die Falte 24 und die Falte 24' verbindenden Schenkel 24-24' gegenüberliegend angeordnet.

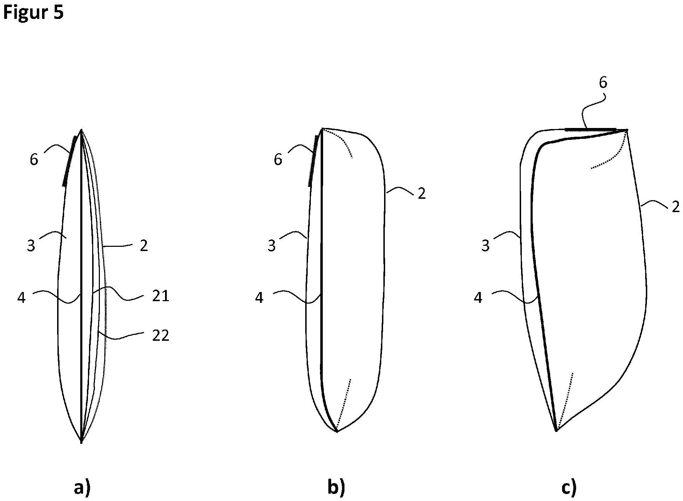

In Figur 5 ist die Funktionsweise der mechanischen Entfaltung des Staubsaugerfilterbeutels beim Einsetzen in einen Upright-Staubsauger dargestellt. Die in Figur 5a dargestellte Abbildung zeigt einen erfindungsgemäßen Staubsaugerfilterbeutel wie beispielsweise in Fig. 1 bzw. Fig. 3 dargestellt im Lagezustand. Dargestellt ist die Aufsicht auf die in Fig. 1 bzw. Fig. 3 dargestellte linke Längsseite LS des Staubsaugerfilterbeutels. Erkennbar ist die hintere Wandung des Staubsaugerfilterbeutels 3, in der die Halteplatte allerdings keine Faltung eingebracht ist, sowie die vordere Wandung 2 des Staubsaugerfilterbeutels, in der die Faltung mit den Seitenfalten 21 und 22 eingebracht ist. In Figur 5b ist auf der rechten Seiten der Staubsaugerfilterbeutel in einer beispielhaften Gebrauchsposition, d.h. mechanisch entfaltet dargestellt. Diese Gebrauchsposition stellt sich dadurch ein, dass der Staubsaugerfilterbeutel wie in Figur 5a dargestellt in einen Staubsauger eingesetzt wird. Dabei wird der geräteseitige Stutzen durch die Figur 5 nicht dargestellte Eintrittsöffnung der Halteplatte in den Staubsaugerfilterbeutel eingeführt. Bei erstmaliger Inbetriebnahme des Staubsaugerfilterbeutels trifft nunmehr der in den Staubsaugerfilterbeutel eintretende Luftstrom unmittelbar auf die erste Beutelwandung 2 mit der beschriebenen Faltung auf. Aufgrund der Tatsache, dass diese Wandung 2 sehr flexibel ausgestaltet ist und dem eintretenden Luftstrom aufgrund der vorhandenen vergrößerten Fläche, die durch die Faltung bedingt ist, nachgeben kann, tritt unmittelbar nach der ersten Inbetriebnahme der Betriebszustand wie in Figur 5b dargestellt ein, indem der Staubsaugerfilterbeutel vollständig entfaltet vorliegt. Einen weiteren Betriebszustand ist in Figur 5c dargestellt. Bei einer derartigen Inbetriebnahme wird der Staubsaugerfilterbeutel in einen Upright-Staubsauger eingesetzt, in dem der geräteseitige Stutzen in Figur 5 gesehen dargestellt von oben in den Staubsaugerfilterbeutel eingeführt wird. Hierbei wird die Halteplatte um ca. 90° nach oben geschwenkt, sodass der Stutzen eines entsprechend Upright-Staubsaugers (nicht dargestellt) durch die Eintrittsöffnung (nicht dargestellt) in das Volumeninnere des Staubsaugerfilterbeutels eingeführt werden kann. Durch die vorhandene Faltung, bestehend aus den Seitenfalten 21 und 22 verfügt die erste Wandung 2 des Staubsaugerfilterbeutels über eine gewissen Flexibilität, sodass bereits beim Aufklappen der Halteklappe 6 in Betriebsposition insbesondere jedoch bei der ersten Inbetriebnahme des Staubsaugerfilterbeutels sich die Wandung 2 öffnet. Hierbei findet ein Entfalten der Faltung damit ein Ausstülpen des Staubsaugerfilterbeutels statt, sodass die Vorderwandung 2 von der hinteren Wandung 3 abgelöst und der Staubsaugerfilterbeutel insgesamt aufgeklappt wird. Dabei findet ggf. eine flexible Verformung des Staubsaugerfilterbeutels im oberen und unteren Bereich statt, sodass verglichen mit der Lagerposition die Länge L des Staubsaugerfilterbeutels im Betriebszustand etwas kürzer ausfällt. Der Staubsaugerfilterbeutel ist somit bereits vor erstmaliger Inbetriebnahme vollständig entfaltet, sodass Verstopfungen etc. effektiv unterbunden werden können.

## Patentansprüche

1. Staubsaugerfilterbeutel (1) für einen Upright-Staubsauger, der eine Länge (L) und eine Breite (B) in einem Verhältnis von > 1,5 aufweist, so dass der Staubsaugerfilterbeutel eine Längsseite (LS) und eine Schmalseite (SS) aufweist, mit einer ersten ein Filtermaterial umfassenden Beutelwand (2), einer zweiten ein Filtermaterial umfassenden Beutelwand (3), wobei die erste (2) und zweite (3) Beutelwand randseitig umlaufend verbunden (4) sind, so dass der Staubsaugerfilterbeutel (1) vollständig geschlossen ist und zwischen der ersten (2) und der zweiten Beutelwand (3) ein Innenraum ausgebildet ist, eine in die zweite Beutelwand (3) eingebrachte Eintrittsöffnung (5), durch die zu reinigende Luft in den Staubsaugerfilterbeutel (1) einströmen kann sowie eine die Eintrittsöffnung (5) einfassende Halteplatte (6),
wobei zumindest die erste Beutelwand (2) eine mindestens eine erste (21) und eine zweite Seitenfalte (22) umfassende, sich in Längsrichtung (L) des Staubsaugerfilterbeutels (1) erstreckende Faltung aufweist, wobei die erste (21) und zweite Seitenfalte (22) parallel oder im Wesentlichen parallel zueinander verlaufen, die erste Seitenfalte (21) zwei Schenkel (4-21, 21-22) aufweist, und das Längenverhältnis des Schenkels (21-22) zum Schenkel (4-21) von 0,1 bis 0,8 beträgt **dadurch gekennzeichnet,**
**dass** die Halteplatte (6) mit Eintrittsöffnung (5)
nahe zu einer Schmalseite (SS) des Staubsaugerfilterbeutels angeordnet ist, so dass das Verhältnis des minimalen Abstands (d) der Halteplatte (6) zu einer schmalseitigen Verbindung (4) des Staubsaugerfilterbeutels bezogen auf eine Dimensionierung (L₆) der Halteplatte (6) in Längsrichtung (L) des Staubsaugerfilterbeutels (1) < 0,5 beträgt, oder
an einer Schmalseite (SS) des Staubsaugerfilterbeutels überstehend angeordnet ist, so dass das Verhältnis des Überstandes (d') der Halteplatte (6) zu einer schmalseitigen Verbindung (4) des Staubsaugerfilterbeutels bezogen auf eine Dimensionierung (L₆) der Halteplatte (6) in Längsrichtung (L) des Staubsaugerfilterbeutels (1) < 0,5 beträgt.

2. Staubsaugerfilterbeutel (1) nach Anspruch 1, **dadurch gekennzeichnet, dass** die Halteplatte (6) mit Eintrittsöffnung (5)
nahe zu einer Schmalseite (SS) des Staubsaugerfilterbeutels angeordnet ist, so dass das Verhältnis des minimalen Abstands (d) der Halteplatte (6) zu einer schmalseitigen Verbindung (4) des Staubsaugerfilterbeutels bezogen auf eine Dimensionierung (L₆) der Halteplatte (6) in Längsrichtung (L) des Staubsaugerfilterbeutels (1) < 0,2beträgt, oder
an einer Schmalseite (SS) des Staubsaugerfilterbeutels überstehend angeordnet ist, so dass das Verhältnis des Überstandes (d') der Halteplatte (6) zu einer schmalseitigen Verbindung (4) des Staubsaugerfilterbeutels bezogen auf eine Dimensionierung (L₆) der Halteplatte (6) in Längsrichtung (L) des Staubsaugerfilterbeutels (1) < 0,2beträgt.

3. Staubsaugerfilterbeutel (1) nach einem der vorhergehenden Ansprüche, **dadurch gekennzeichnet, dass** die Faltung der ersten Beutelwand (2) des Filtermaterials maximal acht Seitenfalten (21, 22, 23, 24, 21', 22', 23', 24'), aufweist.

4. Staubsaugerfilterbeutel (1) nach einem der vorhergehenden Ansprüche, **dadurch gekennzeichnet, dass** zumindest die Faltung der ersten Beutelwand (2) vier Seitenfalten (21, 22, 21', 22') aufweist, wobei die Faltung bezüglich der ersten Beutelwand (2) symmetrisch ausgebildet ist.

5. Staubsaugerfilterbeutel (1) nach vorhergehendem Anspruch, **dadurch gekennzeichnet, dass** der Schenkel (21-22) auf der dem Innenraum abgewandten Seite des Schenkels (4-21) angeordnet ist und in einem Lagerzustand auf diesem zum liegen kommt und eine dritte Seitenfalte (21') zwei Schenkel (4-21', 21'-22') aufweist, wobei der Schenkel (21'-22') auf der dem Innenraum abgewandten Seite des Schenkels (4-21') angeordnet ist und in einem Lagerzustand auf diesem zum Liegen kommt.

6. Staubsaugerfilterbeutel (1) nach einem der Ansprüche 4 bis 5, **dadurch gekennzeichnet, dass** der Schenkel (22-22') mindestens so breit dimensioniert ist, wie die Breite (B₆) der Halteplatte (6), bevorzugt die Breite des Schenkels (22-22') das 1,1 bis 5-Fache der Breite (B₆) der Halteplatte (6) aufweist.

7. Staubsaugerfilterbeutel (1) nach einem der Ansprüche 1 bis 3, **dadurch gekennzeichnet, dass** zumindest die Faltung der ersten Beutelwand (2) acht Seitenfalten (21, 22, 23, 24, 21', 22', 23', 24') aufweist, wobei die Faltung bezüglich der ersten Beutelwand (2) symmetrisch ausgebildet ist.

8. Staubsaugerfilterbeutel (1) nach vorhergehendem Anspruch, **dadurch gekennzeichnet, dass** die Faltung derart ausgebildet ist, dass die die jeweiligen Schenkel der jeweiligen Seitenfalten im Lagerzustand aufeinander zum liegen kommen, wobei bevorzugt die Halteplatte einem äußersten Schenkel (24-24') gegenüberliegend angeordnet ist.

9. Staubsaugerfilterbeutel (1) nach einem der vorhergehenden Ansprüche, **dadurch gekennzeichnet, dass** das Verhältnis von Länge (L) zu Breite (B) größer als 2ist.

10. Staubsaugerfilterbeutel (1) nach einem der vorhergehenden Ansprüche, **dadurch gekennzeichnet, dass** die zweite Beutelwand (3) keine Faltung aufweist.

11. Staubsaugerfilterbeutel (1) nach einem der vorhergehenden Ansprüche, **dadurch gekennzeichnet, dass** das Filtermaterial der ersten (2) und zweiten (3) Beutelwand ein Vliesmaterial ist.

12. Verwendung eines Staubsaugerfilterbeutels (1) nach einem der vorhergehenden Ansprüche als Staubsaugerfilterbeutel für einen Upright-Staubsauger.

13. Verfahren zur Herstellung eines Staubsaugerfilterbeutels (1) nach einem der Ansprüche 1 bis 11, bei dem
a) eine Bahn eines Filtermaterials für eine erste Beutelwand (2) sowie eine Bahn eines Filtermaterials für eine zweite Beutelwand (3) bereitgestellt wird, wobei die Bahn des Filtermaterials für die erste Beutelwand (2) breiter dimensioniert ist wie die Bahn des Filtermaterials für die zweite Beutelwand (3),
b) in zumindest die Bahn des Filtermaterials für die erste Beutelwand (2) eine mindestens eine erste (21) und eine zweite Seitenfalte (22) umfassende Faltung eingebracht wird, so dass die Seitenfalten parallel oder im Wesentlichen parallel zueinander verlaufen, wobei zwei Schenkel (4-21, 21-22) entstehen,
c) die Bahn des Filtermaterials für die erste Beutelwand (2) sowie die Bahn des Filtermaterials für eine zweite Beutelwand (3) übereinander gebracht und randseitig umlaufend verbunden (4) werden, so dass ein vollständig geschlossener Staubsaugerfilterbeutel (1) entsteht, der einen zwischen der ersten (2) und der zweiten Beutelwand (3) ausgebildeten Innenraum aufweist, so dass das Längenverhältnis des Schenkels (21-22) zum Schenkel (4-21) von 0,1 bis 0,8 beträgt,
d) eine Eintrittsöffnung (5) sowie eine Halteplatte (6) in die Bahn des Filtermaterials für die zweite Beutelwand (3) eingebracht wird,
wobei die Bahn des Filtermaterials für die zweite Beutelwand (3) eine Breite (B) aufweist und die Bahn des Filtermaterials für die erste Beutelwand (2) und die Bahn des Filtermaterials für die zweite Beutelwand (3) eine Länge (L) in einem Verhältnis von > 1,5 aufweisen oder ein entsprechendes Verhältnis durch den Verbindungsschritt c) eingestellt wird,
wobei Schritt d) auch vor Schritt a), Schritt b) oder Schritt c) ausgeführt werden kann,
**dadurch gekennzeichnet, dass** die Halteplatte (6) mit Eintrittsöffnung (5)
nahe zu einer Schmalseite (SS) des Staubsaugerfilterbeutels angeordnet wird, so dass das Verhältnis des minimalen Abstands (d) der Halteplatte (6) zu einer schmalseitigen Verbindung (4) des Staubsaugerfilterbeutels bezogen auf eine Dimensionierung (L₆) der Halteplatte (6) in Längsrichtung (L) des Staubsaugerfilterbeutels (1) < 0,5beträgt, oder
an einer Schmalseite (SS) des Staubsaugerfilterbeutels überstehend angeordnet wird, so dass das Verhältnis des Überstandes (d') der Halteplatte (6) zu einer schmalseitigen Verbindung (4) des Staubsaugerfilterbeutels bezogen auf eine Dimensionierung (L₆) der Halteplatte (6) in Längsrichtung (L) des Staubsaugerfilterbeutels (1) < 0,5beträgt.

14. Verfahren nach vorhergehendem Anspruch, **dadurch gekennzeichnet, dass** die Bahn des Filtermaterials für die erste Beutelwand (2) mindestens 20 %breiter dimensioniert ist wie die Bahn des Filtermaterials für die zweite Beutelwand (3).

15. Verfahren nach einem der beiden vorhergehenden Ansprüche, **dadurch gekennzeichnet, dass** die Bahn des Filtermaterials für die erste Beutelwand (2) und die Bahn des Filtermaterials für die zweite Beutelwand (3) in Längsrichtung endlos dimensioniert sind und das Verhältnis von Länge (L) zu Breite (B) durch Einbringen der randseitigen Verbindung (4) in Längsrichtung erzeugt wird, wonach ein einzelner Staubsaugerfilterbeutel (1) abgelängt wird.

16. Verfahren nach einem der Ansprüche 13 bis 15, **dadurch gekennzeichnet, dass** das Filtermaterial für die erste (2) und zweite Beutelwand (3) ein Vliesmaterial ist und die randseitige Verbindung (4) durch Schweißen erzeugt wird.

## Claims

1. A vacuum-cleaner filter bag (1) for an upright vacuum cleaner, which has a length (L) and a width (B) in a ratio of > 1.5, so that the vacuum-cleaner filter bag has a long side (LS) and a narrow side (SS), with a first bag wall (2) comprising a filter material, a second bag wall (3) comprising a filter material, wherein the first (2) and second (3) bag wall are joined (4) in circumambient manner at the edges, so that the vacuum-cleaner filter bag (1) is completely closed and an inner space is formed between the first (2) and the second (3) bag wall, an entry opening (5) made in the second bag wall (3), through which opening air which is to be cleaned can flow into the vacuum-cleaner filter bag (1) and also a holding plate (6) encompassing the entry opening (5), wherein at least the first bag wall (2) has folding comprising at least a first (21) and a second (22) lateral fold and extending in the longitudinal direction (L) of the vacuum-cleaner filter bag (1), wherein the first (21) and second (22) lateral fold extend parallel or substantially parallel to one another, the first lateral fold (21) has two branches (4-21, 21-22), and the length ratio of the branch (21-22) to the branch (4-21) is from 0.1 to 0.8, **characterised in that**
the holding plate (6) with entry opening (5)
is arranged close to a narrow side (SS) of the vacuum-cleaner filter bag, so that the ratio of the minimum distance (d) of the holding plate (6) from a join (4), on the narrow side, of the vacuum-cleaner filter bag relative to dimensioning (L₆) of the holding plate (6) in the longitudinal direction (L) of the vacuum-cleaner filter bag (1) is < 0.5, or
is arranged projecting over a narrow side (SS) of the vacuum-cleaner filter bag, so that the ratio of the projecting length (d') of the holding plate (6) to a join (4), on the narrow side, of the vacuum-cleaner filter bag relative to dimensioning (L₆) of the holding plate (6) in the longitudinal direction (L) of the vacuum-cleaner filter bag (1) is < 0.5.

2. A vacuum-cleaner filter bag (1) according to Claim 1, **characterised in that** the holding plate (6) with entry opening (5)
is arranged close to a narrow side (SS) of the vacuum-cleaner filter bag, so that the ratio of the minimum distance (d) of the holding plate (6) from a join (4), on the narrow side, of the vacuum-cleaner filter bag relative to dimensioning (L₆) of the holding plate (6) in the longitudinal direction (L) of the vacuum-cleaner filter bag (1) is < 0.2, or
is arranged projecting over a narrow side (SS) of the vacuum-cleaner filter bag, so that the ratio of the projecting length (d') of the holding plate (6) to a join (4), on the narrow side, of the vacuum-cleaner filter bag relative to dimensioning (L₆) of the holding plate (6) in the longitudinal direction (L) of the vacuum-cleaner filter bag (1) is < 0.2.

3. A vacuum-cleaner filter bag (1) according to one of the preceding claims, **characterised in that** the folding of the first bag wall (2) of the filter material has at most eight lateral folds (21, 22, 23, 24, 21', 22', 23', 24').

4. A vacuum-cleaner filter bag (1) according to one of the preceding claims, **characterised in that** at least the folding of the first bag wall (2) has four lateral folds (21, 22, 21', 22'), the folding being formed symmetrically with respect to the first bag wall (2).

5. A vacuum-cleaner filter bag (1) according to the preceding claim, **characterised in that** the branch (21-22) is arranged on that side of the branch (4-21) which is remote from the inner space, and in a storage state comes to lie thereon, and a third lateral fold (21') has two branches (4-21', 21'-22'), the branch (21'- 22') being arranged on that side of the branch (4-21') which is remote from the inner space, and in a storage state coming to lie thereon.

6. A vacuum-cleaner filter bag (1) according to one of Claims 4 to 5, **characterised in that** the branch (22-22') is at least as wide as the width (B₆) of the holding plate (6), preferably the width of the branch (22-22') is 1.1 to 5 times the width (B₆) of the holding plate (6).

7. A vacuum-cleaner filter bag (1) according to one of Claims 1 to 3, **characterised in that** at least the folding of the first bag wall (2) has eight lateral folds (21, 22, 23, 24, 21', 22', 23', 24'), the folding being formed symmetrically with respect to the first bag wall (2).

8. A vacuum-cleaner filter bag (1) according to the preceding claim, **characterised in that** the folding is formed such that the the respective branches of the respective lateral folds in the storage state come to lie on one another, with preferably the holding plate being arranged located opposite an outermost branch (24-24').

9. A vacuum-cleaner filter bag (1) according to one of the preceding claims, **characterised in that** the ratio of length (L) to width (B) is greater than 2.

10. A vacuum-cleaner filter bag (1) according to one of the preceding claims, **characterised in that** the second bag wall (3) does not have any folding.

11. A vacuum-cleaner filter bag (1) according to one of the preceding claims, **characterised in that** the filter material of the first (2) and second (3) bag wall is a non-woven material.

12. Use of a vacuum-cleaner filter bag (1) according to one of the preceding claims as a vacuum-cleaner filter bag for an upright vacuum cleaner.

13. A method for producing a vacuum-cleaner filter bag (1) according to one of Claims 1 to 11, in which
a) a web of a filter material for a first bag wall (2) and also a web of a filter material for a second bag wall (3) is provided, wherein the web of the filter material for the first bag wall (2) is wider than the web of the filter material for the second bag wall (3),
b) folding comprising at least a first (21) and a second (22) lateral fold is introduced into at least the web of the filter material for the first bag wall (2), so that the lateral folds extend parallel or substantially parallel to one another, producing two branches (4-21, 21-22),
c) the web of the filter material for the first bag wall (2) and also the web of the filter material for a second bag wall (3) are brought over one another and are joined (4) in circumambient manner at the edges, so that a completely closed vacuum-cleaner filter bag (1) is produced which has an inner space formed between the first (2) and the second bag wall (3), so that the length ratio of the branch (21-22) to the branch (4-21) is from 0.1 to 0.8,
d) an entry opening (5) and also a holding plate (6) is introduced into the web of the filter material for the second bag wall (3),
wherein the web of the filter material for the second bag wall (3) has a width (B) and the web of the filter material for the first bag wall (2) and the web of the filter material for the second bag wall (3) have a length (L) in a ratio of > 1.5 or a corresponding ratio is set by the joining step c),
wherein step d) can also be carried out prior to step a), step b) or step c),
**characterised in that** the holding plate (6) with entry opening (5)
is arranged close to a narrow side (SS) of the vacuum-cleaner filter bag, so that the ratio of the minimum distance (d) of the holding plate (6) from a join (4), on the narrow side, of the vacuum-cleaner filter bag relative to dimensioning (L₆) of the holding plate (6) in the longitudinal direction (L) of the vacuum-cleaner filter bag (1) is < 0.5, or
is arranged projecting over a narrow side (SS) of the vacuum-cleaner filter bag, so that the ratio of the projecting length (d') of the holding plate (6) to a join (4), on the narrow side, of the vacuum-cleaner filter bag relative to dimensioning (L₆) of the holding plate (6) in the longitudinal direction (L) of the vacuum-cleaner filter bag (1) is < 0.5.

14. A method according to the preceding claim, **characterised in that** the web of the filter material for the first bag wall (2) is at least 20% wider than the web of the filter material for the second bag wall (3).

15. A method according to one of the preceding two claims, **characterised in that** the web of the filter material for the first bag wall (2) and the web of the filter material for the second bag wall (3) are of endless dimension in the longitudinal direction and the ratio of length (L) to width (B) is produced by introducing the join (4) at the edges in the longitudinal direction, after which an individual vacuum-cleaner filter bag (1) is cut off.

16. A method according to one of Claims 13 to 15, **characterised in that** the filter material for the first (2) and second (3) bag wall is a non-woven material and the join (4) at the edges is produced by welding.

## Revendications

1. Sac filtrant d'aspirateur (1) pour un aspirateur vertical, qui présente une longueur (L) et une largeur (B) avec un rapport > 1,5, de façon à ce que le sac filtrant d'aspirateur comprenne un côté longitudinal (LS) et un côté étroit (SS), avec une première paroi de sac (2) comprenant un matériau filtrant, une deuxième paroi de sac (2) comprenant un matériau filtrant, la première (2) et la deuxième (3) parois du sac étant reliées au niveau de leur pourtour (4) de façon à ce que le sac filtrant d'aspirateur (1) soit entièrement fermé et à ce que, entre la première (2) et la deuxième paroi de sac (3), un espace interne soit formé, une ouverture d'entrée (5), réalisée dans la deuxième paroi du sac (3), à travers laquelle l'air à nettoyer peut s'écouler vers le sac filtrant d'aspirateur (1) ainsi qu'une plaque de maintien (6) entourant l'ouverture d'entrée (5),
au moins la première paroi du sac (2) comprenant un pliage comprenant au moins un premier (21) et un deuxième pli latéral (22) et s'étendant dans la direction longitudinale (L) du sac filtrant d'aspirateur (1), le premier (21) et le deuxième (22) pli latéral (22) s'étendant parallèlement ou globalement parallèlement entre eux, le premier pli latéral (21) comprenant deux branches (4-21, 21-22) et le rapport de longueur entre la branche (21-22) et la branche (4-21) étant de 0,1 à 0,8,
**caractérisé en ce que**
la plaque de maintien (6) avec ouverture d'entrée (5)
est disposée près d'un côté étroit (SS) du sac filtrant d'aspirateur de façon à ce que le rapport entre la distance minimale (d) de la plaque de maintien (6) à une liaison côté étroit (4) du sac filtrant d'aspirateur et une dimension (L₆) de la plaque de maintien (6) dans la direction longitudinale (L) du sac filtrant d'aspirateur (1) est < 0,5 ou
est disposée en porte-à-faux au niveau d'un côté étroit (SS) du sac filtrant d'aspirateur de façon à ce que le rapport entre le porte-à-faux (d') de la plaque de maintien (6) par rapport à une liaison côté étroit (4) du sac filtrant d'aspirateur et une dimension (L₆) de la plaque de maintien (6) dans la direction longitudinale (L) du sac filtrant d'aspirateur (1) est < 0,5.

2. Sac filtrant d'aspirateur (1) selon la revendication 1, **caractérisé en ce que** la plaque de maintien (6) avec ouverture d'entrée (5)
est disposée près d'un côté étroit (SS) du sac filtrant d'aspirateur de façon à ce que le rapport entre la distance minimale (d) de la plaque de maintien (6) à une liaison côté étroit (4) du sac filtrant d'aspirateur et une dimension (L₆) de la plaque de maintien (6) dans la direction longitudinale (L) du sac filtrant d'aspirateur (1) est < 0,2 ou
est disposée en porte-à-faux au niveau d'un côté étroit (SS) du sac filtrant d'aspirateur de façon à ce que le rapport entre le porte-à-faux (d') de la plaque de maintien (6) par rapport à une liaison côté étroit (4) du sac filtrant d'aspirateur et une dimension (L₆) de la plaque de maintien (6) dans la direction longitudinale (L) du sac filtrant d'aspirateur (1) est < 0,2.

3. Sac filtrant d'aspirateur (1) selon l'une des revendications précédentes, **caractérisé en ce que** le pliage de la première paroi du sac (2) du matériau filtrant comprend au maximum huit plis latéraux (21, 22, 23, 24, 21', 22', 23', 24').

4. Sac filtrant d'aspirateur (1) selon l'une des revendications précédentes, **caractérisé en ce qu'**au moins le pliage de la première paroi du sac (2) comprend quatre plis latéraux (21, 22, 21', 22'), le pliage étant conçu de manière symétrique par rapport à la première paroi du sac (2).

5. Sac filtrant d'aspirateur (1) selon l'une des revendications précédentes, **caractérisé en ce que** la branche (21-22) est disposée sur le côté de la branche (4-21) opposé à l'espace interne et s'appuie contre celle-ci dans un état de stockage, et un troisième pli latéral (21') comprend deux branches (4-21', 21'-22'), la branche (21'-22') étant disposées sur le côté de la branche (4-21') opposé à l'espace interne et s'appuyant contre celle-ci dans un état de stockage.

6. Sac filtrant d'aspirateur (1) selon l'une des revendications précédentes, **caractérisé en ce que** la branche (22-22') est au moins aussi large que la largeur (B₆) de la plaque de maintien (6), de préférence la largeur de la branche (22-22') représente de 1,1 à 5 fois la largeur (B₆) de la plaque de maintien (6).

7. Sac filtrant d'aspirateur (1) selon l'une des revendications 1 à 3, **caractérisé en ce qu'**au moins le pliage de la première paroi du sac (2) comprend huit plis latéraux (21, 22, 23, 24, 21', 22', 23', 24'), le pliage étant conçu de manière symétrique par rapport à la première paroi du sac (2).

8. Sac filtrant d'aspirateur (1) selon la revendication précédente, **caractérisé en ce que** le pliage est conçu de façon à ce que les branches correspondantes des plis latéraux correspondants s'appuient les unes contre les autres dans l'état de stockage, de préférence la plaque de maintien étant disposée en face d'une branche externe (24-24').

9. Sac filtrant d'aspirateur (1) selon l'une des revendications précédentes, **caractérisé en ce que** le rapport entre la longueur (L) et la largeur (B) est supérieur à 2.

10. Sac filtrant d'aspirateur (1) selon l'une des revendications précédentes, **caractérisé en ce que** la deuxième paroi du sac (3) ne comprend aucun pliage.

11. Sac filtrant d'aspirateur (1) selon l'une des revendications précédentes, **caractérisé en ce que** le matériau filtrant de la première (2) et de la deuxième paroi du sac (3) est un matériau non tissé.

12. Utilisation d'un sac filtrant d'aspirateur (1) selon l'une des revendications précédentes en tant que sac filtrant d'aspirateur pour un aspirateur vertical.

13. Procédé de fabrication d'un sac filtrant d'aspirateur (1) selon l'une des revendications 1 à 11, dans lequel
a) une bande de matériau filtrant pour une première paroi du sac (2) ainsi qu'une bande d'un matériau filtrant pour une deuxième paroi du sac (3) sont mises à disposition, la bande de matériau filtrant pour la première paroi du sac (2) étant plus large que la bande de matériau filtrant pour la deuxième paroi du sac (3),
b) dans au moins la bande de matériau filtrant pour la première paroi du sac (2), est réalisé un pliage comprenant au moins un premier (21) et un deuxième pli latéral (22), de façon à ce que les plis latéraux s'étendent parallèlement ou globalement parallèlement, deux branches (4-21, 21-22) étant réalisées,
c) la bande de matériau filtrant pour la première paroi du sac (2) ainsi que la bande de matériau filtrant pour la deuxième paroi du sac (3) étant disposées l'une sur l'autre et étant reliées sur leur pourtour (4), de façon à ce qu'un sac filtrant d'aspirateur (1) entièrement fermé en résulte, qui comprend un espace interne réalisé entre la première (2) et la deuxième paroi du sac (3), de façon à ce que le rapport de longueur entre la branche (21-22) et la branche (4-21) soit de 0,1 à 0,8,
d) une ouverture d'entrée (5) ainsi qu'une plaque de maintien (6) sont réalisées dans la bande de matériau filtrant pour la deuxième paroi du sac (3),
la bande de matériau filtrant pour la deuxième paroi du sac (3) présentant une largeur (B) et la bande de matériau filtrant pour la première paroi du sac (2) et la bande de matériau filtrant pour la deuxième paroi du sac (3) présentant une longueur (L) avec un rapport > 1,5, ou un rapport correspondant est ajusté par l'étape de liaison c),
l'étape d) pouvant également être réalisée avant l'étape a), l'étape b) ou l'étape c), **caractérisé en ce que** la plaque de maintien (6) avec ouverture d'entrée (5)
est disposée près d'un côté étroit (SS) du sac filtrant d'aspirateur de façon à ce que le rapport entre la distance minimale (d) de la plaque de maintien (6) à une liaison côté étroit (4) du sac filtrant d'aspirateur et une dimension (L6) de la plaque de maintien (6) dans la direction longitudinale (L) du sac filtrant d'aspirateur (1) soit < 0,5 ou
est disposée en porte-à-faux au niveau d'un côté étroit (SS) du sac filtrant d'aspirateur, de façon à ce que le rapport entre le porte-à-faux (d') de la plaque de maintien (6) par rapport à une liaison côté étroit (4) du sac filtrant d'aspirateur et une dimension (L₆) de la plaque de maintien (6) dans la direction longitudinale (L) du sac filtrant d'aspirateur (1) soit < 0,5.

14. Procédé selon la revendication précédente, **caractérisé en ce que** la bande de matériau filtrant pour la première paroi du sac (2) soit au moins 20 % plus large que la bande de matériau filtrant pour la deuxième paroi du sac (3).

15. Procédé selon l'une des deux revendications précédentes, **caractérisé en ce que** la bande de matériau filtrant pour la deuxième paroi du sac (2) et la bande de matériau filtrant pour la deuxième paroi du sac (3) sont dimensionnées sans fin dans la direction longitudinale et le rapport entre la longueur (L) et la largeur (B) est produit par la réalisation de la liaison côté bord (4) dans la direction longitudinale, un sac filtrant d'aspirateur (1) individuel étant mis à la longueur selon celui-ci.

16. Procédé selon l'une des revendications 13 à 15, **caractérisé en ce que** le matériau filtrant pour la première (2) et la deuxième paroi du sac (3) est un matériau non tissé et la liaison côté bord (4) est réalisée par soudure.
